# EUROPEAN PATENT APPLICATION

(11) **EP 0 766 050 A2**
(43) Date of publication of application: **02.04.1997**
(21) Application number: 96650030.8
(22) Date of filing: 26.07.1996
(51) Int. Cl.: F24F 3/14, B05B 15/12

(54) **Adiabatic saturator and method for conditioning an air stream**

(30) Priority: 27.07.1995 US 508107
(71) Applicant: HADEN, INC.,, Auburn Hills, Michigan 48326 (US)
(72) Inventor: St. Louis, Daniel M., MaComb, Michigan 48042 (US)
(74) Representative: Casey, Lindsay Joseph

(57) **Abstract**

An apparatus and process for the adiabatic saturation of an air stream supplied to an operation area. An air stream to be conditioned entering an adiabatic chamber is intimately mixed with a fluid stream entering the chamber at a constant temperature, saturating the air stream and changing the temperature of the air stream to equal the fluid stream temperature. The saturated air stream is then reheated to obtain the desired psychrometric levels for the conditioned air stream.

## Description

### Background Of The Invention

The present invention relates generally to an apparatus and process for continuously providing air at a predetermined temperature and humidity. More specifically, the present invention relates to an adiabatic saturator air supply system for supplying air at predetermined psychrometric conditions.

Air supply systems are typically made to clean and condition air flowing through buildings, rooms, or equipment. These air systems employ various devices to filter, heat, cool, humidify or dehumidify air, including dry filters, electrostatic precipitators, burners, heating coils, sprayed coils, cooling coils, wetted media, steam injection, and other apparatus. These devices are used in various combinations depending upon ambient conditions and the target conditions. Specifically, these air systems typically require that both temperature and relative humidity be continually monitored in order to assure the desired air quality.

Currently available air supply systems use programmable control loops that automatically monitor both temperature and humidity, requiring complex controls for the entire system. These process controls are also bulky and typically expensive, decreasing the practicality of the underlying applications.

Controlling the relative humidity of an air supply is particularly difficult because relative humidity is a function of both temperature and absolute humidity, and both have been required to be controlled in the past. These controls can be expensive and difficult to use. For example, "wet-bulb" thermometers are less reliable than ordinary "dry-bulb" thermometers, and are subject to problems (such as drying out of the wick) that dry-bulb thermometers do not experience. (Throughout this application, a reference to "temperature" means dry-bulb temperature; where the "wet-bulb" temperature is intended to be referenced, it will be specified.) Also, systems requiring both temperature and absolute humidity measurement may not be capable of operating in both summer and winter conditions (i.e. when inlet air has either a significantly higher or lower temperature and/or humidity than the desired application conditions).

The solution to these problems which forms the subject of the present invention will be described with reference to the conditioning of an air stream flowing through a paint spray booth. An example of one such paint spray booth is described in U.S. Patent No. 4,222,319, the disclosure of which is incorporated herein by reference. Patent application Serial No.08/507,930 , filed July 27, 1995, and entitled Integrated Paint Spray Booth And Air Conditioning System And Process, discloses a unique arrangement of component equipment constituting a compact, space-efficient integrated paint spray booth and air conditioning system, and its disclosure is incorporated herein by reference. However, it will be apparent to those of ordinary skill in the art that the present invention can be successfully adapted for use in conditioning an air stream used in a wide variety of other applications, as well.

Relatively specific and stringent psychrometric values may be required of air supply systems such as those used in waterborne and powder paint spray booth applications. This is due to the comparatively narrow window of psychrometric conditions that are acceptable for waterborne and powder paint applications (e.g., about 65°F/60% RH for powder paint, and about 70°F/70% RH for waterborne paint). Various techniques have been developed to provide humidity control systems for paint spray booth applications. However, these previous systems have required the monitoring and maintenance of both the desired relative humidity and temperature levels for the air within the controlled system. These multi-variable processes require complex control systems to achieve the preselected filtered, psychrometric conditions necessary for the introduction of an air stream into a spray booth. These systems or "air supply houses" are also relatively large structures taking approximately one-third of the space required for the spray booth and adding additional floors above the spray booth, thus decreasing the practicality and cost effectiveness of the paint facility.

Another disadvantage associated with available air supply control systems adapted for use in paint spray booths is that they have proven difficult to operate in both summer and winter conditions. Further, paint spray booths require the conditioning and filtering of large volumes of air (e.g., 500,000 cubic feet per minute), with a corresponding expenditure of energy. It is therefore desirable both to recover energy from the exhaust air, and to minimize the air volume required to undergo conditioning.

Accordingly, there is a need for an air conditioning system that minimizes the need for control systems, thereby decreasing costs, and that can operate under a wide variety of operating conditions in an economical fashion.

### Summary of the Invention

Accordingly, it is an object of the present invention to provide an air supply system for applications requiring the use of air having a controlled temperature and humidity.

Another object of the invention is to provide a system that accomplishes the adiabatic saturation of an air stream without the need for directly measuring relative humidity.

A further object of the invention is to provide a system that can minimize the flow rate of air requiring conditioning by recirculating processed air within the system.

Still a further object of the invention is to provide a method for conditioning an air stream that is more economical than existing air control systems.

In accordance with a preferred embodiment of the present invention, an apparatus for conditioning an air stream to provide the air stream to an operation area at desired, predetermined temperature and relative humidity levels is provided. The apparatus includes an adiabatic saturator through which the air stream and water flows. The water intimately mixes with the air stream within the saturator, resulting in an air stream exiting the saturator which is completely saturated with water, which has a temperature equal to the temperature of the water entering the saturator, and which has been scrubbed of particulate contaminants. A first temperature sensor is positioned to measure the temperature of the air stream exiting the saturator. A heater (such as a heating coil or a burner) or a cooling coil is located upstream of the saturator, for selectively heating the air stream or chilling water and pumping the water through a cooling coil to cool the air prior to its entry into the saturator, in response to the temperature measurement from the first temperature sensor, and is useful when the volume of air flow within the conditioning system is not constant. Preferably, however, a cooling coil is not used since the air can be directly cooled within the saturator.

In a preferred embodiment, the air stream can be reheated after it exits the saturator to increase its temperature and reduce its relative humidity to the desired, predetermined levels. In this embodiment, a second temperature sensor is positioned to measure the temperature of the air stream downstream of the saturator and after it has been reheated. The reheater is adjustably responsive to the temperature measurement of the second temperature sensor.

In the particularly preferred embodiment, the adiabatic saturator includes a spray tower containing packing elements. The packing elements enhance the heat transfer and saturation of the air stream improving the mixing an intimate contact between the water and the air stream within the spray tower.

A process for conditioning an air stream to provide the air stream to an operation area at desired, predetermined temperature and relative humidity levels also forms a part of the present invention. First, a continuous flow of air and water is maintained through an adiabatic chamber. The air stream and the water within the chamber intimately mixes so that the air stream is saturated with water and the temperature of the air stream exiting the chamber is approximately equal to the temperature of the water entering the chamber. Next, the temperature of the air stream exiting the saturator is measured with a first temperature sensor. The air stream or the water, prior to its entry to the chamber, can be selectively heated or chilled, in response to the temperature measurement of the first temperature sensor. After the air stream exits the adiabatic chamber, the air stream can be reheated; the temperature of this air stream can be measured by a second temperature sensor, and the amount of reheating can be selectively controlled to account for changes in the volume of air flow through the system. Preferably, the-amount of reheating is kept at a constant rate if the air flow can be maintained at a relatively constant rate, further minimizing process controls.

In an alternative embodiment of the process of the present invention, varying proportions of ambient air and air from the operation area can be selectively recirculated to the adiabatic chamber. Also, the water exiting the chamber can be recirculated back through the chamber.

### Brief Description of the Drawings

The novel features which are characteristic of the present invention are set forth in the appended claims. The invention itself, however, together with further objects and attendant advantages, will be best understood by reference to the following description taken in connection with the accompanying drawings in which:
FIGURE 1 is a side cross-sectional view of the preferred embodiment of the adiabatic saturator of the present invention, a packed spray tower;
FIGURE 2 is a schematic, cross-sectional view of an integrated spray booth and air conditioning system that constitutes one application of the present invention;
FIGURE 3 is a schematic diagram of the process steps of a preferred embodiment of the present invention; and
FIGURE 4 is a thermodynamic chart illustrating the effect of summer and winter conditions on the adiabatic saturator.

### Detailed Description of the Preferred Embodiment

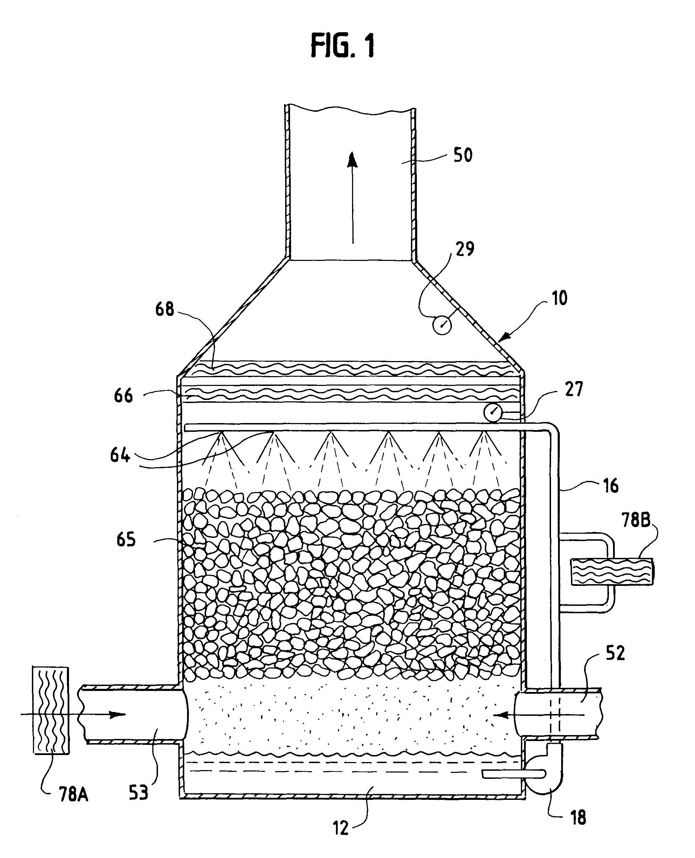

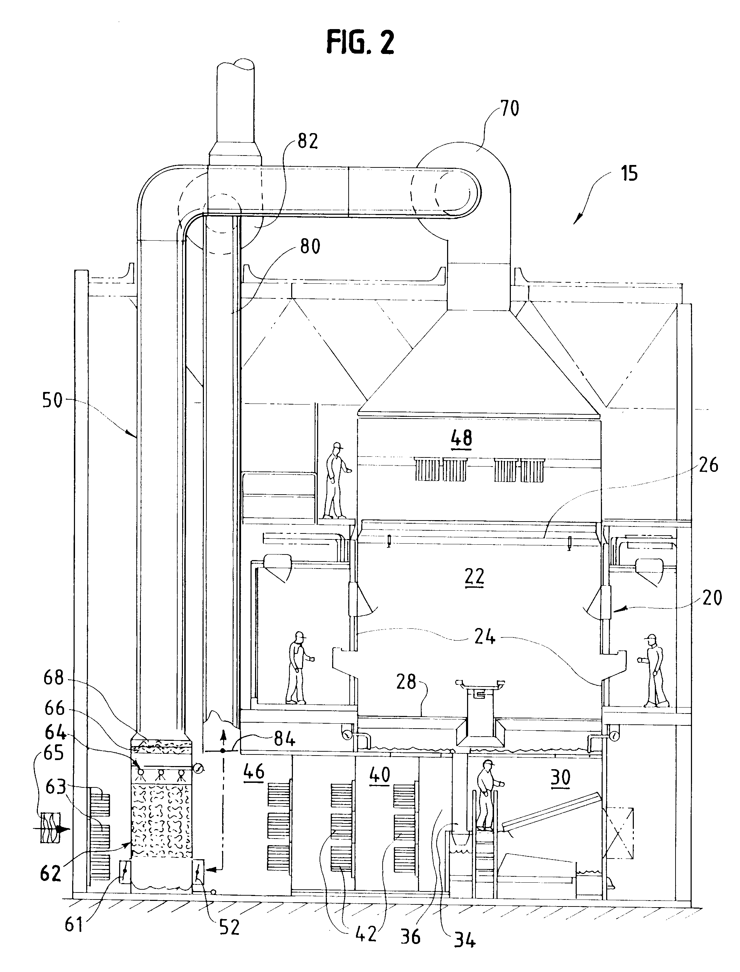

An air conditioning chamber or apparatus, preferably consisting of a packed spray tower, is designated generally as 10 in FIGURE 1. The upper portion of air conditioning chamber 10 is in fluid communication with duct 50, which conveys properly conditioned air to an operation area, such as the paint spray operation shown in FIGURE 2 and described below.

Air conditioning apparatus 10 is an adiabatic saturator, a device in which heat is neither gained or lost. With an adiabatic saturator, the heat of vaporization for the water that is evaporated is supplied by the cooling of the air passing through the saturator. The wet-bulb temperature of the air stream is constant throughout the chamber, and the weight of water evaporated equals the increase in the specific humidity of the air within the chamber. Tower 10 should be constructed to be sufficiently large so that the air stream exiting the chamber will be saturated at the wet-bulb temperature of the air stream entering the chamber.

Packed spray tower 10 shown in FIGURE 1 accommodates [spelling] a downward flow of water provided by spray nozzles 64 to thereby properly condition the upwardly flowing air mass through the saturator to a prescribed and predetermined temperature and humidity. The water flow is recirculated within saturator/tower 10 by pump 18, which continually delivers the water to spray nozzles 64 from holding tank 12. Thus, within tower 10 the air stream is brought into contact with water for a suitable duration so that the air becomes saturated with moisture (i.e., it has 100% relative humidity), and the wet-bulb temperature of the air stream exiting the tower approximately equals the temperature of the water entering the tower (differing only by radiation and velocity errors that affect the wet-bulb thermometer). The air exit stream then contacts heat exchanger 68, which preferably adds a constant amount of heat to the air stream to alter the air stream to the desired psychrometric conditions. Because the heat added to the air exit stream is constant, provided the air stream flow remains constant, process controls are minimized.

Still referring to FIGURE 1, spray tower 10 is preferably preceded by a burner to warm the entering air stream (e.g., heat exchanger 78A), primarily to avoid freezing of the water in winter conditions. Heat exchanger 68 is used to warm the air stream exiting the tower to the desired temperature, while simultaneously reducing its relative humidity to the desired value.

While in the preferred embodiment adiabatic saturation is achieved by adjusting the temperature of the inlet air stream to a wet-bulb temperature equal to the temperature of the fluid stream entering the saturator, it should be appreciated that, alternatively, adiabatic saturation can be achieved by adjusting the temperature of the fluid stream to equal the wet-bulb temperature of the air stream exiting the saturator. Either process results in an air stream having a known temperature and a known relative humidity without the need for monitoring any parameter other than the temperature of the air stream.

In the preferred embodiment of the present invention, adiabatic saturation of the supply air takes place in packed spray tower 10 containing packing elements 65. The water impacts packing elements 14 within saturator 10, intimately mixing with and "scrubbing" the counter-current air stream. (Cross-streams or even unidirectional streams of air and water can also be used, though a counter-current air stream is preferred, as discussed below.) Packed spray tower 10 permits contaminants to be removed from the air stream (they are transferred to the water) while simultaneously conditioning the air stream in the manner described above. In addition, a demister 66 and a reheater 68 may be positioned downstream of adiabatic saturator 10. The scrubbing fluid to be used should be water, since the use of fluids other than water would require the measurement of humidity, in contravention to the teaching of the present invention.

The packing elements 65 within spray tower 10 may be a plastic material of the type disclosed in U.S. Patent No. 4,668,442 and sold as NuPac® Tower Packing-by Lantec Products Inc. of Agoura Hills, California. This packing element is currently preferred because of its high scrubbing efficiency and its high resistance to fouling or plugging. The packing elements enhance the heat transfer and humidification effects of the water on the air stream within the spray tower, for as the water contacts the packing elements, it surrounds and wets them, increasing the surface area of the water which is in direct, intimate contact with the flowing air stream.

As one example, for a constant air flow through an adiabatic packed spray tower of 500 feet/minute, and given a constant liquid water flow of 8 gallons/minutes/square foot, a packed bed length of 4 feet has been found to permit inlet air ranging in temperature from 0°F to 100°F to be properly conditioned for introduction into a paint spray booth. The capital cost for this filtering and air conditioning system has been estimated to be between about $1.00 and $1.50 per cubic foot/minute.

Referring now to FIGURE 2, a preferred embodiment of the present invention, an integrated paint spray booth and air conditioning system, is designated generally as 15 and is schematically illustrated. The system 15 includes as its basic components a spray booth housing 20, a scrubber chamber 30, a filtering chamber 40, a duct 50, an air conditioning apparatus 10, and an air circulating means, such as blower or fan 70. Saturator 10 receives recirculating air from the spray booth operation through inlet 52 located in a lower portion of saturator 10. A fresh air stream may also be introduced via filter 63 into saturator 62 and mixes with the circulating air in the system and the downward flow of water.

The spray booth housing 20 defines a paint application zone 22 through which the automotive bodies or other articles to be painted pass sequentially. Housing 20 includes opposing side walls 24 and a top 26 and bottom 28 each of which includes one or more air passages to accommodate a downward flow of the air through the paint application zone 22. The scrubber chamber 30 extends longitudinally beneath the paint spray booth housing 20 and includes an inlet comprised of a plurality of longitudinally spaced cylinders 34 which receive air discharged from the spray booth, and terminate in a scrubber outlet 36. The air flow exiting scrubber chamber 30, now laden with various contaminant particles acquired within operation area 32 of the paint spray booth, enters into filtering chamber 40 and passes through a plurality of filter elements 42. Downstream of air filters 42, on the side of the filtering chamber opposite to the scrubber chamber, is a discharge plenum 46 in fluid communication with duct 50. Inlet 52 permits the air stream to flow up through saturator 10 to duct 50, which extends a sufficient vertical height to permit the circulation of air to the top of the spray booth 20.

After the air supply stream is adiabatically saturated, the air supply stream then passes through demister 66, which removes water droplets carried by the air stream. Next, the air supply stream passes through heat exchanger 68 to bring the air to the desired temperature and relative humidity, thus placing the air stream within the desired psychrometric "window." The air stream then circulates through duct work 50 by means of fan 70, which also acts to offset any pressure drop that occurs within the tower. Fan 70 may then draw the air stream into a supply plenum 48 and through additional bag filters, if necessary. Supply plenum 48 provides for the even introduction of the air stream across operation area 32 during operation.

An exhaust duct 80 may also be employed, and is preferably located to communicate with the system at the plenum disposed between filtering chamber 40 and the inlet 52 to duct 50. An exhaust fan 82 discharges the exhausted air to atmosphere. Automatically controlled dampers 61 and 84 can be employed to balance the air flow in the system by adjusting the quantity of fresh air introduced into the system and/or the quantity of system air that is exhausted. Alternatively, additional treatment of the air upon its exit from operation area 32 may be necessary.

By simply spraying water into the plenum or duct 50 (shown in FIGURE 2), the adiabatic saturation of the air stream can be achieved. One advantage of this embodiment is that it generates a relatively small pressure drop, thus resulting in lower operating costs. The disadvantage, however, is that duct 50 may be required to be extremely long for a given application. For example, in the context of a paint spray booth, it has been found that a packed spray tower having a bed length of four feet is acceptable for treating air ranging from approximately 32°F and 0% relative humidity to approximately 90°F and 100% relative humidity. By contrast, it is believed that a comparable unpacked tower would be required to be over 25 feet in length. This results in undesired increases in capital costs, weight and operating space.

It will now be appreciated that, in accordance with the present invention, only controls for measuring temperature, not humidity, are required, and the need for humidity or moisture sensors is eliminated. Referring to FIGURE 1, one temperature sensor 27 is positioned immediately downstream of the saturator and upstream of reheater 68. Temperature sensor 27 thus monitors the saturated air temperature; in a winter condition (for example), either the air entering the saturator or the water in or supplied to the saturator can be heated to obtain the desired temperature of the air stream, depending on the input from sensor 27. In addition, a second temperature sensor 29 can be positioned within duct 50 immediately downstream of reheater 68; this temperature measurement permits the adjustment of the amount of heat from the reheater, ensuring an adequate-amount of reheat, given changes in the volume of air flow. (Volumetric air flow changes can occur within the system for various reasons, including changes in the operation, the amount of recirculation of the air stream, the damper mechanisms, etc.) With these two simple and inexpensive temperature sensors 27 and 29, which need only be ordinary thermometers, complete psychrometric control over the air stream is obtained. Because the temperature of the incoming ambient air can also vary during the day, in either summer of winter conditions, and the air stream volume can also vary, constant temperature monitoring of the air stream exiting the saturator should be performed.

All or part of the air stream can be recirculated and introduced back into packed tower 10, or it can be removed through exhaust duct 80 by exhaust fan 82, where the air can be processed for further treatment of (e.g.) volatile organic compounds. The amount of recirculation necessary for the system is dependant upon at least two factors. First, in extremely cold weather conditions, it may be necessary to heat fresh air entering saturator 10. An increased amount of recirculated air would minimize the energy requirements for heating the fresh air stream to be introduced into the saturator. Minimizing the portion of the air stream being removed through the exhaust also minimizes the energy requirements and cost of any secondary air treatment processes that might be used.

A second counterbalancing factor to be considered in determining the amount of recirculated air to be used is the nature and amount of contaminants built up within the system. Some applications may not require extensive human exposure to the operation area. Thus, there may not be an overriding concern of taking in "fresh" air. However, by increasing the amount of recirculated air within the system, the amount of potential contaminants within the air stream increases, possibly creating potential environmental or safety risks within the system, given the application. Approximately 0-90% by volume air stream recirculation is preferred for the particular application of a paint spray booth, to ensure non-explosive conditions for the paint solvent.

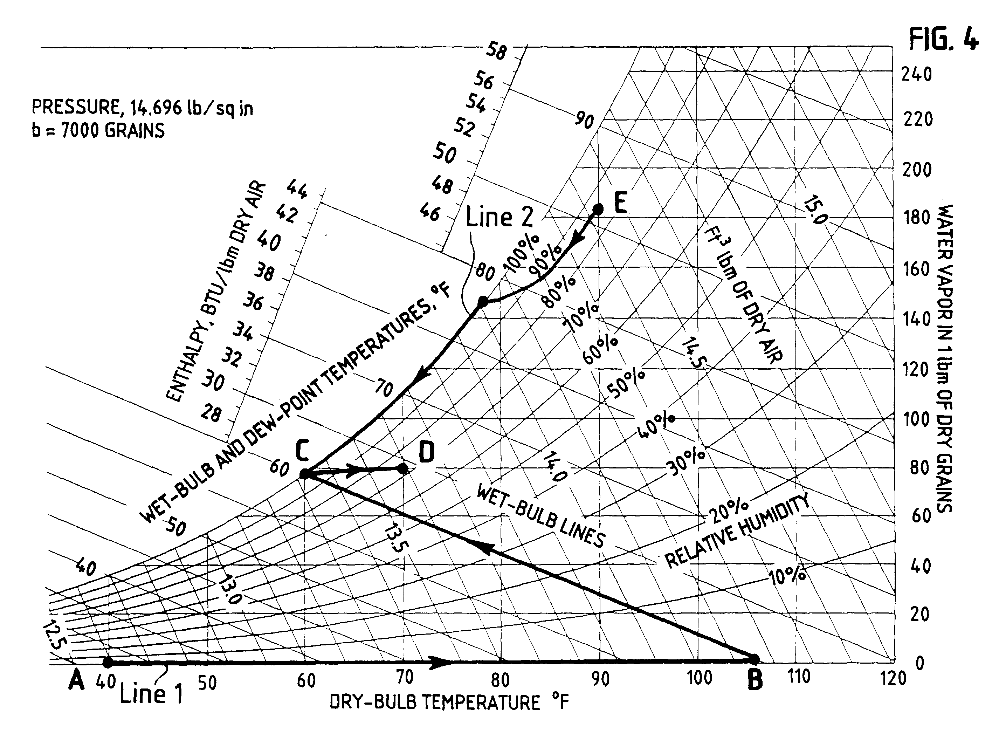

The ability of the present air supply system to deal with varying conditions is shown by reference to the following examples together with FIGURE 4. In these examples the desired psychrometric conditions are 70°F and 70% relative humidity under both winter and summer conditions. The examples are intended to be illustrative and should not be considered as limitations on the claimed invention.

### Example 1 -- Winter Conditions

As shown in line 1 of FIGURE 4, a constant flow of air is brought into tower 10 at a temperature of 40°F and 10% relative humidity (shown as point A), and air is pretreated with a burner so that it is heated to approximately 106°F and a wet bulb temperature of 60°F (shown as point B). The air is then saturated, and exits tower 10 at approximately 60°F and 100% relative humidity (point C). This exit air stream then passes through heat exchanger 68, which provides the air stream with a constant amount of reheat (approximately 3 Btu/lb dry air) to produce the desired air stream at approximately 70% relative humidity and 70°F (point D).

### Example 2 -- Summer Conditions

As shown in line 2 of FIGURE 4, a constant flow of air is brought into tower 10 at a temperature of 90°F and 85% relative humidity (shown as point E), and the water in tower 10 is treated with a chiller (not shown) so that the exit air stream is brought down to a temperature of 60°F and a relative humidity of 100% (shown as point C). The exit air steam then passes through heat exchanger 24, which provides the air stream with a constant amount of reheat to produce the resulting air stream at 70% relative humidity and 70°F (point D).

Chilling the water avoids the need for a separate cooling coil during summer to cool air prior to its introduction into the tower. Rather, the present system preferably compensates for the air inlet temperature using chilled water within the system, thus creating a more efficient heat exchange and reducing the capital cost of the system. Alternatively, the air stream may be cooled prior to saturation, but cooling the air is less thermodynamically efficient than chilling the water.

The use of counter-current air and fluid streams (i.e., streams in parallel but opposite directions) is preferred. The air stream exiting saturator 10, as well as the fluid stream entering saturator 10, have a constant temperature across the cross-section of each exiting stream. This results in a constant temperature profile for the exiting air stream and avoids temperature stratification of the exiting streams (i.e., different temperatures in different regions along the cross-section of the exiting stream, which occurs when the air and fluid stream directions are normal to each other). Temperature stratification can result in certain regions of the air stream being outside the desired psychrometric conditions (although the average psychrometric levels of the overall air stream will be within the desired levels). Temperature stratification may therefore require the use of further devices to mix the air.

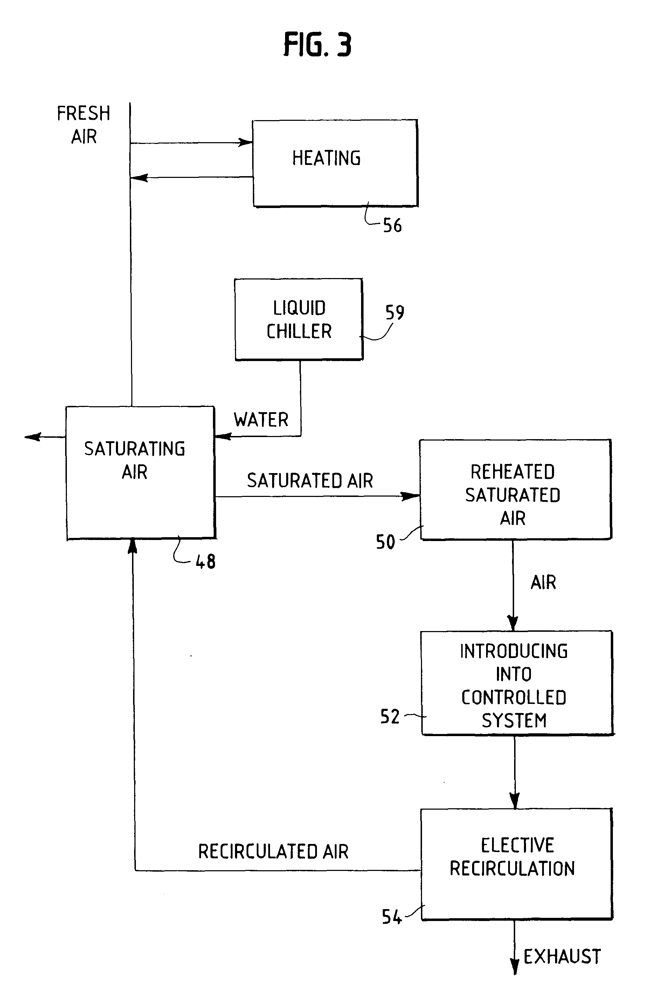

A process for providing an air stream at preselected temperature and relative humidity values also forms part of the present invention. Referring now to FIGURE 3, an initial step in the process (represented by block 48) involves saturating an air stream by scrubbing the air stream with a fluid such as water maintained at the desired wet-bulb temperature sought for the air stream. Next, the air stream is preferably reheated with a predetermined, constant amount of heat (see block 50). Now, the air stream is introduced into an operation area (block 52). Preferably (referring now to block 54), a portion of the "used" air stream can now be recirculated back to be saturated (block 48). During cold weather conditions, fresh air can be heated (block 56) by a heating coil or burner prior to saturating the air. In summer conditions, the fresh air can be chilled (e.g. with water) prior to saturating it, or (preferably) the fluid can be chilled (block 59).

It should be understood that in an alternative embodiment of the present invention, reheating of the air stream exiting the saturator may not be required (i.e., 100% RH may be within the psychrometric window given the application). Alternatively, a reheater can be used but a temperature sensor positioned downstream of the reheater need not be used, since volumetric changes in the air stream may not need to be accounted for in a given application.

Of course, it should be noted that various changes and modifications to the preferred embodiments of this invention will be apparent to those skilled in the art. Such changes and modifications can be made without departing from the spirit and scope of the present invention. For instance, wetted media or sprayed coils can be used to achieve adiabatic saturation within packed or unpacked towers. Further, the broad teaching of the present invention of conditioning an air stream to adiabatic saturation is obviously not limited to the conditioning of air used for paint spray booths, but can also be used with other operations that require the conditioning of air. It is, therefore, intended that such changes and modifications be covered by the following claims.

## Claims

1. An apparatus for conditioning an air stream to provide the air stream to an operation area at desired, predetermined temperature and relative humidity levels, comprising:
an adiabatic saturator through which the air stream and water flows, the water intimately mixing with the air stream within the saturator and resulting in an air stream exiting the saturator which is completely saturated with the water and which has a wet-bulb temperature equal to the temperature of the water entering the saturator;
a first temperature sensor positioned to measure the temperature of the air stream exiting the saturator;
heat transfer means for adding or removing heat from either the air stream or the water prior to its entry into the saturator, the heat transfer means being adjustably responsive to the temperature measurement of the first temperature sensor.

2. An apparatus as claimed in Claim 1, further comprising:
means for reheating the air stream after the air stream exits the saturator to thereby increase the temperature and reduce the relative humidity of the conditioned air stream to the desired, predetermined levels; and
a second temperature sensor positioned to measure the temperature of the air stream flowing out of the means for reheating, the means for reheating being adjustably responsive to the second temperature sensor.

3. An apparatus as claimed in Claim 1 or Claim 2, wherein the adiabatic saturator is a packed spray tower that also removes particle contaminants from the air stream.

4. An apparatus as claimed in any of Claims 1-3, wherein the conditioned air stream is supplied to a paint spray booth.

5. An apparatus as claimed in any of Claims 1-4, wherein the air stream is either chilled or preheated prior to entering the saturator,

6. An apparatus as claimed in any of Claims 1-5, wherein the water stream is chilled prior to entering the saturator.

7. An apparatus as claimed in any of Claims 1-6, wherein at least a portion of the conditioned air stream is recirculated back to the operations area.

8. An apparatus as claimed in any of Claims 1-7, wherein the direction of the air stream within the adiabatic saturator is parallel to, and in the opposite direction of, the direction of the water.

9. An apparatus as claimed in any of Claims 1-8, further comprising recirculating means for selectively reintroducing the air stream from the operations area into the adiabatic saturator.

10. An apparatus as claimed in any of Claims 1-9, further comprising selective recirculating means enabling the saturator to be provided with varying proportions of ambient air and air from the operations area.

11. An apparatus for conditioning an air stream to provide the air stream to an operation area at desired, predetermined temperature and relative humidity levels, comprising:
an adiabatic saturator through which the air stream and water flows, the water intimately mixing with the air stream within the saturator and resulting in an air stream exiting the saturator which is completely saturated with the water and which has a temperature equal to the temperature of the water entering the saturator, the water also serving to remove particulate contaminants within the air stream;
means for adjusting the temperature of either the air stream or the water prior to its entry into the saturator;
means for reheating the air stream positioned outside of the saturator and downstream of the air stream, to thereby increase the temperature and reduce the relative humidity of the conditioned air stream to the desired, predetermined levels; and
a first temperature sensor positioned upstream of the means for reheating for measuring the temperature of the air stream exiting the saturator, the temperature adjusting means being adjustably responsive to the first temperature sensor.

12. An apparatus for conditioning an air stream to provide the air stream to an operation area at desired, predetermined temperature and relative humidity levels, comprising:
an adiabatic saturator through which the air stream and water flows, the water intimately mixing with the air stream within the saturator and resulting in an air stream exiting the saturator which is completely saturated with the water and which has a temperature equal to the temperature of the water entering the saturator;
means for reheating the air stream after the air stream exits the saturator, to thereby increase the temperature and reduce the relative humidity of the conditioned air stream to the desired, predetermined levels;
a first temperature sensor positioned upstream of the means for reheating to measure the temperature of the air stream exiting the saturator, the means for adding or removing heat being adjustably responsive to the first temperature sensor;
means for adding or removing heat from either the air stream or the water prior to its entry into the saturator, in response to the temperature measurement of the first temperature sensor; and
a second temperature sensor disposed downstream of the means for reheating for measuring the temperature of the reheated air stream exiting the saturator, the means for reheating being adjustably responsive to the temperature measurement of the second temperature sensor.

13. An apparatus for conditioning an air stream to be used in a paint spray booth, the air stream being conditioned to desired, predetermined temperature and relative humidity levels, comprising:
an adiabatic saturator, wherein the adiabatic saturator includes a spray tower containing packing elements through which an air stream and a water stream flows, the water stream entering the saturator being maintained at a constant, predetermined temperature and intimately mixing with the air stream within the spray tower so that the air stream is completely saturated with water and the temperature of the air stream exiting the spray tower equals the temperature of the water stream entering the saturator;
the packing elements enhancing heat transfer between the water and the air stream and saturation of the air stream, and the water also scrubbing the air stream and removing particulate contaminants within the air stream;
heat transfer means for heating the air stream or chilling the water prior to the entry of the heated air stream or the chilled water into the spray tower; and
a first temperature sensor positioned to measure the temperature of the air stream exiting the spray tower, the heat transfer means being adjustably responsive to the temperature measurement of the first temperature sensor.

14. An apparatus as claimed in Claim 13 for conditioning an air stream to be used in a paint spray booth, further comprising:
means for reheating the air stream after the air stream exits the saturator to thereby increase the temperature and reduce the relative humidity of the conditioned air stream to the desired, predetermined levels; and
a second temperature sensor positioned to measure the temperature of the air stream exiting the means for reheating, the means for reheating being adjustably responsive to the temperature measurement of the second temperature sensor.

15. An apparatus as claimed in Claims 13-14, wherein the water stream flows down through the tower, and the air stream flows up through the tower in a direction parallel to the water stream.

16. An apparatus for conditioning an air stream to provide the air stream to an operation area at desired, predetermined temperature and relative humidity levels, comprising:
an adiabatic saturator through which the air stream and water flows, the water intimately mixing with the air stream within the saturator and resulting in an air stream exiting the saturator which is completely saturated with the water and which has a temperature equal to the temperature of the water entering the saturator.

17. An apparatus for conditioning an air stream to desired, predetermined temperature and relative humidity levels, the conditioned air stream to be provided to an operation area, comprising:
a spray tower having upper and lower portions, the air stream being introduced into the lower portion of the tower and flowing up through the tower, and a fluid stream being introduced into the upper portion of the tower and flowing down through the tower, the air and fluid streams intimately mixing within the spray tower;
a pump for conveying the fluid stream exiting the lower portion of the spray tower back into the upper portion of the tower;
means for heating the air stream exiting the tower;
means for sensing the temperature of the air stream exiting the tower positioned upstream of the means for heating, the means for heating being adjustably responsive to the means for sensing temperature; and
means for circulating the conditioned air stream exiting the spray tower to the operation area.

18. An apparatus as claimed in Claim 17, further comprising a demister located downstream of the spray tower, and upstream of the means for heating.

19. A process for conditioning an air stream to provide the air stream to an operation area at desired, predetermined temperature and relative humidity levels, comprising the steps of:
a. maintaining a continuous flow of an air stream and water through an adiabatic chamber, the air stream and the water intimately mixing within the chamber so that the air stream is saturated and the temperature of the air stream exiting the chamber is approximately equal to the temperature of the water entering the chamber;
b. measuring the temperature of the air stream exiting the saturator with a first temperature sensor;
c. heating or cooling the air stream or the water prior to its entry to the chamber, in response to the temperature measurement in step b.;
d. reheating the air stream at an air stream location downstream of the first temperature sensor; and
e. measuring the temperature of the air stream downstream of the means for reheating, and adjusting the amount of reheating in response to this temperature measurement to thereby provide the air stream with the desired predetermined levels of temperature and relative humidity.

20. A process as claimed in Claim 19, wherein a constant amount of heat is added to the air stream in step d.

21. A process as claimed in Claim 19 or Claim 20, wherein the amount of heating or cooling in step c. is dependent upon the variance between the desired temperature level, and the temperature of the air stream exiting the chamber.

22. A process as claimed in any of Claims 19-21, further comprising the step of selectively recirculating varying proportions of ambient air and air from the operation area to the adiabatic chamber.

23. A process as claimed in any of Claims 19-22, further comprising the step of recirculating the water exiting the adiabatic saturator back to the saturator.
